# EUROPÄISCHE PATENTSCHRIFT

(11) **EP 1 167 492 B1**
(45) Veröffentlichungstag und Bekanntmachung des Hinweises auf die Patenterteilung: **03.01.2007**
(21) Anmeldenummer: 01114925.9
(22) Anmeldetag: 20.06.2001
(51) Int. Cl.: C10J 3/24, C10J 3/16, C10J 3/14, C10J 3/26, C10J 3/30, C10J 3/86, C10B 53/02, C10B 49/06, C10B 57/06

(54) **Verfahren und Vorrichtung zur Erzeugung eines Brenngases aus Biomasse**
Process and apparatus for the production of fuel gas from biomass
Procédé et installation pour la production d' un gaz combustible à partir de biomasse

(30) Priorität: 23.06.2000 DE 10030778; 02.06.2001 DE 10127138
(43) Veröffentlichungstag der Anmeldung: 02.01.2002
(73) Patentinhaber: Gesellschaft für Nachhaltige Stoffnutzung mbH, 06120 Halle (DE)
(72) Erfinder: Spindler, Herbert, Prof. Dr., 06120 Halle (DE); Bauermeister, Ute, Dr., 04205 Leipzig (DE)
(74) Vertreter: Wablat, Wolfgang

(56) Entgegenhaltungen:
- EP-A- 0 924 288
- WO-A-99/18173
- DE-A- 3 245 104
- US-A- 3 920 417

## Beschreibung

### Verfahren und Vorrichtung zur Erzeugung eines Brenngases aus Biomassen

Die Erfindung betrifft ein Verfahren und eine Vorrichtung zur Erzeugung eines Brenngases aus Biomassen, insbesondere Holz, in einem Festbettreaktor mit Wasserdampf und Luft als Vergasungsmittel unter Normaldruck mit dem Ziel, ein Brenngas mit einer solchen Zusammensetzung zu erzeugen, daß es motorfähig ist und sein motorischer Einsatz nicht zu Abgasen mit Inhaltsstoffen in gefahrdrohender Menge führt.

Es sind bereits zahlreiche Verfahren zur Biomassevergasung, speziell in Festbettvergasern, bekannt. Einen Überblick über den Stand der Technik geben die Übersichtsarbeiten von
- Th. Nussbaumer, Grundlagen der Holzvergasung, HeizungKlima Nr. 7/1990, S. 3-11,
- R. Bühler, Stand der Technik von Holzvergasungsanlagen, in: Neue Erkenntnisse zur thermischen Nutzung von Holz, Tagungsband zum 3. Holzenergiesymposium, 21. Okt. 1994, S. 195-223, ETH Zürich und
- die Monographie von J. Obernberger und A. Hammerschmid, Dezentrale Biomasse-Kraft-Wärme-Kopplungstechnologien, Schriftenreihe Thermische Biomassenutzung, Bd. 4, dbv-Verlag, Graz 1999.

Die Vergasung eines kohlenstoffhaltigen Materials kann auf verschiedene Weise durchgeführt werden, je nachdem ob das Vergasungsmittel Luft, Sauerstoff, Wasserdampf oder Gemische daraus verwendet werden, ob die Reaktionswärme beim Vergasungsprozeß selbst erzeugt (autotherm) oder von außen zugeführt wird (allotherm). Ferner ist zu unterscheiden zwischen der Vergasung in einem Festbett oder in einer Wirbelschicht. Die Vergasung kann auch unter Druck durchgeführt werden. Am häufigsten sind jedoch Ausführungsformen, die unter Normaldruck und mit Luft als Vergasungsmedium arbeiten. Die Qualität des erhaltenen Gases hängt stark ab von der Prozesstemperatur und dem Vergasungsmedium. Wird Luft verwendet, ist in dem Produktgas eine große Menge Stickstoff enthalten. Der Heizwert Hᵤ des Brenngases liegt dann zwischen 4 bis 6 MJ/Nm³ (Schwachgas). Seine Hauptbestandteile sind Wasserstoff, Kohlenmonoxid und Kohlendioxid, etwas Methan und andere Kohlenwasserstoffe. Das Brenngas enthält immer Teere und andere Verunreinigungen wie Schwefelverbindungen und Stäube mit Metallfrachten.

Bei allen Verfahren geht der eigentlichen Vergasung stets eine Trocknung des zu vergasenden Materials voraus, die im wesentlichen bei 170 °C abgeschlossen ist. Es folgt bei Temperaturen oberhalb 200 °C die Entgasung (Schwelung, Pyrolyse, neuerdings auch Thermolyse genannt), bei der in teils exothermer, teils endothermer Reaktion Gase und organische Verbindungen (Kohlenwasserstoffe, Säuren) gebildet werden. Bei 500 bis 600 °C ist dieser Vorgang beendet, und es bleibt Koks (Holzkohle) zurück. Dieser Koks wird bei weiter steigender Temperatur entweder vergast oder verbrannt, je nachdem ob mit Sauerstoffunterschuss oder Sauerstoffüberschuss gearbeitet wird.

Während der Vergasung laufen verschiedene chemische Reaktionen ab. Allerdings stellen sich die thermodynamischen Gleichgewichte, die mit den Reaktionen verbunden sind und sich in komplexer Weise überlagern, gar nicht vollständig ein noch lassen sich aus ihnen zwingende Schlüsse für den Ablauf des Gesamtgeschehens in einem Vergasungsreaktor ziehen. Denn durch die der eigentlichen Vergasung vorgelagerte Thermolyse werden bereits zwei Drittel bis drei Viertel der Biomasse zu gasförmigen Verbindungen mit einem außerordentlich weitgefächerten Produktspektrum umgesetzt, die dann im glühenden Koksbett vielfältigen Sekundärreaktionen unterliegen und zu teilweise sehr unerwünschten Substanzen führen, die ungenau unter den Begriff "Teere" zusammengefaßt werden.

Für eine motorische Nutzung von Holzgas wird eine Reinheit von < 50 mg/Nm³ Teer im Brenngas gefordert, die von den meisten Vergasertypen nicht erreicht wird. Wirbelschichtvergaser liefern ein Gas mit mehr als 10 g/Nm³ Teer. Ähnliche Werte werden für Festbettvergaser angegeben, die nach dem Gegenstromprinzip arbeiten. Nur mit Gleichstromvergasern und sogenannten Doppelfeuervergasern werden Reinheitsgrade erreicht, die in die Nähe der angegebenen Forderung kommen. Inzwischen sind von verschiedenen Motorenherstellern die Reinheitsanforderungen noch verschärft worden; für Gasturbinen gelten generell höhere Anforderungen an die Gasqualität als für Motoren.

Für die Lösung des Reinheitsproblems sind mehrere Verfahren bekannt, die sich in drei Gruppen einordnen lassen:
1. Verfahren, die nach dem Grundprinzip der Gleichstromvergasung mit absteigender Vergasung arbeiten, wobei in der Oxidationszone durch Sondermaßnahmen sehr hohe Temperaturen oberhalb 1000 °C erreicht werden, um die "Teere" thermisch zu cracken, z.B. durch einen keramischen Gegenkegel beim HTV-Verfahren nach Juch, wobei über 2000 °C erreicht werden sollen, oder eine spezielle Zusatzheizstufe, wie beim Doppelfeuervergaser, wodurch Temperaturen über 1200 °C eingestellt werden (USP 5.571.294, USP 5.580.361).
2. Verfahren, bei denen der Gesamtvorgang der Biomassevergasung in mehreren apparativ getrennten Stufen durchgeführt wird, z.B. Durchführung der Pyrolyse zur Erzeugung von Pyrolysegas und Koks und gesonderte Vergasung dieses Kokses unter kalorischer Nutzung der Verbrennungswärme des Pyrolysegases, wie beim Carbo-V-Verfahren der UET Freiberg oder Durchführung einer dreistufigen Vergasung wie beim EASYMOD-Vergaser nach Michel-Kim (DE 196 53 901 A1).
3. Verfahren, bei denen das vorgereinigte Holzgas in einem nachgeschalteten Reaktor einer katalytischen Heißgasreinigung unterzogen wird, z.B. mit Dolomit oder Nickelverbindungen als Katalysatoren (vgl. Beenackers und Maniatis, Gas cleaning in electricity production via gasification of biomass: Conclusions of the workshop. In: Bridgwater (Hrg), Advances in thermochemical Biomass conversion, S. 540-546, Blackie 1994).

Alle diese Verfahren sind unwirtschaftlich und auf dem Markt gegenüber herkömmlichen Energieerzeugungsverfahren, insbesondere Stromerzeugungsverfahren, nicht konkurrenzfähig. Dies ist bedingt durch hohe investive Kosten, den hohen Aufwand für die Gasreinigung und den insgesamt noch niedrigen Wirkungsgrad der Umwandlung der chemischen Energie der Biomasse über die motorische Nutzung des erzeugten Brenngases in mechanische bzw. elektrische Energie.

Bei diesen Verfahren wird ein Schwachgas mit einem (unteren) Heizwert Hᵤ von 4 bis 6 MJ/Nm³ und einer in weiten Grenzen schwankenden Zusammensetzung von etwa 12 bis 22 Vol.-% CO, 12 bis 22 Vol.-% H₂, 10 bis 15 Vol.-% CO₂, 1 bis 4 Vol.-% CH₄ und 50 bis 55 Vol.-% N₂ erzeugt. Der Motorenwirkungsgrad ηₘₒₜ einer Schwach-Gasanlage liegt bei ca. 30 %, der Vergasungswirkungsgrad ηᵥ meist nicht höher als 60 %, woraus ein elektrischer Anlagenwirkungsgrad, definiert als ηₑₗ = ηᵥ ηₘₒₜ, von höchstens 18 % resultiert.

Dieser niedrige Umwandlungsgrad der chemischen Energie des Brennstoffs in universell nutzbare elektrische Energie ist durchaus unbefriedigend, wenn er auch etwa doppelt so hoch liegt wie beim Dampfprozeß, bei welchem der im Kessel erzeugte Dampf für den Antrieb eines Dampfmotors verwendet wird. Dies wird auch nicht wesentlich günstiger, wenn mit dem höchsten derzeit realisierbaren Motorenwirkungsgrad von ηₘₒₜ = 35 % gerechnet wird. Eine wesentliche Verbesserung des elektrischen Wirkungsgrades ist nur über die Erhöhung der Vergasungseffektivität zu erreichen.

Die Erfindung setzt sich das Ziel, diese Nachteile bei der Erzeugung eines Brenngases aus Biomassen, insbesondere aus Holz, zu beseitigen. Es bestand die Aufgabe, das Verfahren technisch vergleichsweise einfach und insgesamt wirtschaftlich zu gestalten.

Erfindungsgemäß gelingt das durch ein Verfahren in einem Festbettvergasungsreaktor mit Wasserdampf und Luft als Vergasungsmittel unter Normaldruck, bei dem
- die Biomasse mit einem anorganischen Mischkatalysator versetzt wird
- die dotierte Biomasse innerhalb oder außerhalb des Reaktors auf einen Restwassergehalt zwischen 18 und 32 Masse-% konditioniert und dabei auf Temperaturen bis 120 °C vorgewärmt wird,
- die Biomasse im oberen Teil des Reaktors mit Heißdampf und/oder anderen heißen Medien auf 125 bis 195 °C aufgeheizt und dabei ein Wassergehalt von 18 bis 32 Masse-%, bezogen auf die Trockensubstanz der Biomasse, eingestellt wird,
- die Biomasse weiter
   **entweder** mit heißen Gasmedien auf 250 bis 480 °C aufgeheizt wird, wobei die Menge des darin enthaltenen Luftstroms 5 bis 20 Vol.-% des austretenden Rohgasstromes, auf gleiche Bedingungen umgerechnet, beträgt (stärker oxidierende Prozessführung)
   **oder** das im unteren Teil des Reaktors abgenommene Rohgas zum Teil wieder in den oberen Bereich des Reaktors eingeführt und die Biomasse auf 250 bis 580 °C erhitzt wird (stärker hydrierende Prozessführung) und
- anschließend die als Koks verbleibende Biomasse
   im unteren Teil des Reaktors durch Zugabe heißer Luft
- in Mengen von 5 bis 25 Vol.-% des austretenden Rohgasstromes, auf gleiche Bedingungen bezogen,
- bis höchstens 900 °C erhitzt und
- der im Reaktor abgenommene und nicht wieder eingeführte Teil des Rohgases zu Brenngas gereinigt wird.

Überraschend wurde gefunden, daß sich die komplexen Vorgänge in der Pyrolyse- oder Thermolysestufe des Gesamtprozesses der Vergasung im Temperaturbereich von etwa 230 bis 450 °C katalytisch steuern lassen, und zwar in Richtung zu mehr niedermolekularen Gasen und mehr Koks. Es handelt sich bei dieser Art von Katalyse nicht um eine katalytische Crackung oder ähnliche Reaktionen in einer gesonderten Apparatur, sondern um einen Prozess, bei dem der Katalysator der Biomasse zugesetzt wird.

Der anorganische Katalysator wird der feuchten oder getrockneten Biomasse als wässrige Lösung als Suspension, als Slurry oder feste Mischung vorzugsweise in solcher Menge zugegeben, daß der Anteil des Katalysators an der so dotierten Biomasse 0,1 bis 5 Masse-%, bezogen auf die Trockensubstanz der Biomasse, beträgt.

Als anorganische Katalysatoren werden insbesondere Gemische von Verbindungen der I. und II. Hauptgruppe des Periodensystems des Elements (PSE) und/oder der VIII. Nebengruppe des PSE verwendet.

Besonders geeignete anorganische Katalysatoren sind Gemische von einzelnen oder mehreren Verbindungen des Natriums, Kaliums, Magnesiums, Calciums und Eisens. Es ist zweckmäßig, hierbei die Carbonate, Hydroxide, Oxide, Aquo-, Hydrogen- und Hydroxiverbindungen gegenüber den Halogen- und Schwefelverbindungen zu bevorzugen.

Besonders geeignet ist ein anorganischer Mischkatalysator, bei dem der Anteil der Verbindungen der I. und II. Hauptgruppe des Periodensystems der Elemente (PSE) mindestens das Dreifache des entsprechenden Anteils der Verbindungen der VIII. Nebengruppe des PSE beträgt und der Anteil der Verbindungen der Nebengruppenelemente wenigstens ein Zehntel ausmacht.

Zweckmäßig ist es, wenn beim anorganischen Mischkatalysator der Anteil der Verbindungen der I. Hauptgruppe des PSE wenigstens das Doppelte der Verbindungen der Nebengruppenelemente und wenigstens die Hälfte der Verbindungen aus Elementen der II. Hauptgruppe des PSE ausmacht, gerechnet nach ihren Masseanteilen.

Es hat sich herausgestellt, dass der Mischkatalysator zusätzliche anorganische Zuschläge enthalten kann. Vorzugsweise kann die Vergasungsasche aus dem Reaktor selbst zugesetzt werden.

Der anorganische Mischkatalysator sollte vorzugsweise in einer solchen Menge und Beschaffenheit zugegeben werden, dass der Anteil des festen Katalysators an der so dotierten Biomasse 0,1 bis 5 Masse-%, bezogen auf die Trockensubstanz der Biomasse, beträgt und der Wassergehalt der Masse zwischen 18 und 35 % liegt.

Völlig unerwartet zeigte sich, daß bereits ab 230 °C katalytisch wirkende Zusätze in kleinen Mengen ab 0,1 Masse-%, bezogen auf die Trockensubstanz, die Thermolyse von Biomasse günstig beeinflussen. Die katalytische Wirkung nimmt zwar mit der Menge zu, aber immer langsamer, so daß eine Zugabemenge über 5 Masse-% zwar an sich unschädlich, aber ungünstig ist, da sie den Vergasungsrückstand unnötig vermehrt.

Der Wirkungsmechanismus dieser Zusätze ist zwar noch unklar, doch lassen sich vorteilhafte Wirkungen beschreiben, welche die Erfindung begründen. Die katalytisch wirkenden Stoffe verschieben das Maximum der Thermolyse nach tieferen Temperaturen und zwar in Abhängigkeit von ihrer Zusammensetzung, ihrer Konzentration und der Art ihrer Aufbringung auf die Biomasse, so daß bei den als besonders vorteilhaft angegebenen Durchführungsformen die Thermolyse im wesentlichen bereits bei 320 °C abgeschlossen ist, wie durch thermoanalytische Zusatzuntersuchungen nachgewiesen werden konnte.

Für die erfindungsgemäße Aufbringung der Katalysatoren ist es vorteilhaft, diese Stoffe auf die in gestückter Form, beispielsweise als gebrochenes Holz mit Maximallängen der Teile von 5 bis 10 cm oder als Pellets ähnlicher Dimensionierung, vorliegende ungetrocknete Biomasse in Form einer konzentrierten Lösung, als SuspenSion, als Slurry oder auch in fester Abmischung in der gewünschten Menge so zuzugeben, dass durch Tränkung oder einfache Durchmischung eine möglichst gleichmäßige Verteilung erreicht wird.

Es ist günstig, die Biomasse erst nach ihrer Beaufschlagung mit dem Katalysator zu trocknen, weil auf diese Weise eine weitere Homogenisierung der Zusätze erreicht wird. Der Gesamtwassergehalt des Vergasungsgutes im Reaktor wird etwa auf 18 bis 40 Masse-% eingestellt, wobei die Wasserzugabe in Form von Dampf bereits 12 bis 32 Masse-% der eingesetzten Biomasse, bezogen auf die Trockensubstanz, ausmacht. Erfindungsgemäß soll der Restwassergehalt der getrockneten Biomasse 18 bis 32 Masse-% betragen. Vorzugsweise wird die dotierte Biomasse im oberen Teil des Reaktors durch Zufuhr von über überhitztem Wasserdampf auf 150 ° bis 180 ° aufgeheizt und dabei ein Wassergehalt von 22 bis 28 Masse-% eingestellt.

Es ist weiterhin vorteilhaft, diese Trocknung mit Abwärme aus der Vergasungsanlage durchzuführen und die so vorbehandelte Biomasse noch heiß, bei Temperaturen zwischen 80 und 150 °C, zweckmäßig zwischen 100 und 120 °C, in den Reaktor einzugeben. In der dem Reaktoreingang naheliegenden Zone sollte sie durch die Zufuhr der heißen Medien auf 280 bis 350 °C aufgeheizt werden.

Zweckmäßig erfolgt die Aufheizung des Reaktors durch gleichzeitige Zufuhr von überhitztem Wasserdampf und/oder anderen heißen Gasmedien mit Temperaturen von 300 bis 600 °C.

Bei der stärker oxydierenden Prozessführung wird die heiße Luft in der Nähe des Wasserdampfeintritts auf zweckmäßig 300 °C bis 450 °C aufgeheizt und eingeleitet, ihre Menge beträgt 5 bis 15 Vol.-% des austretenden Rohgasstromes, auf gleiche Bedingungen bezogen.

In einer bevorzugten Verfahrensweise wird in den unteren Teil des Reaktors kontrolliert heiße Luft eingeleitet, deren Gesamtmenge 5 bis 23 Vol.-%, vorzugsweise 10 bis 12 Vol.-% der Rohgasmenge, bezogen auf gleiche Bedingungen, beträgt.

Bei der Variante der stärker hydrierenden Prozessführung wird der aus dem unteren Bereich des Reaktors abgeführte heiße Rohgasstrom in zwei Teilströme geteilt und ein Teilstrom von 10 bis 70 Vol.-%, vorzugsweise 20 bis 50 Vol.-%, des Gesamtstromes dem oberen Teil des Reaktors unterhalb der Trocknungszone wieder zugeführt.

Durch eine weitere Schleuse gelangt das Material durch seine eigene Schwere in die tieferen Bereiche des Reaktors. Dort wird es durch zurückgeführtes bis zu über 600 °C heißes Rohgas weiter aufgeheizt und dadurch der Thermolyse unterworfen, ohne dass dazu Luft zugeführt wird. Da also das Material nicht durch Luftsauerstoff oxidiert, sondern durch Einwirkung von außen zugeführter Medien aufgeheizt wird, kann von einem, zumindesten partiell, allothermen Verfahren gesprochen werden.

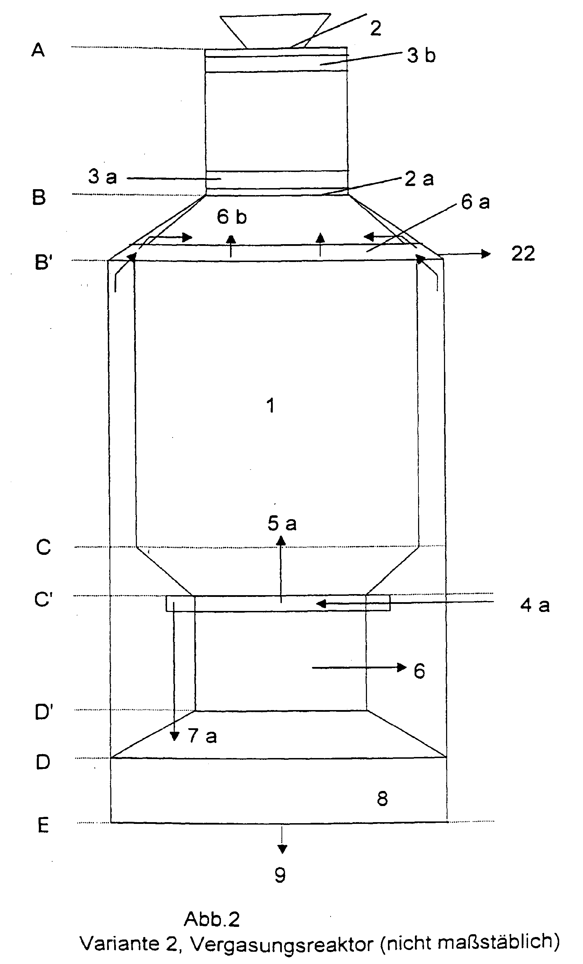

Es genügt, wenn zu diesem Schritt 10 Vol.-% bis 70 Vol.-% des weiter unten, wie in Abb. 2 dargestellt, austretenden Rohgasstromes eingesetzt werden.

Überraschender Weise zeigte es sich, dass dann nur noch 5 bis 15 Vol.-% Luft, bezogen auf den austretenden und zwar nicht recyclierenden auf gleiche Bedingungen von Druck und Temperatur umgerechneten Rohgasstrom für den Reaktolysevorgang gebraucht werden, um die Vergasung bei Temperaturen bis höchstens 900 °C abzuschließen.

Unerwartet wird so ein Brenngas mit einem beträchtlich höheren Heizwert erhalten, als bisher gefunden wurde. Dieses Gas hat zwar einen deutlich höheren Gehalt an Kohlendioxid, als den üblichen, dafür aber einen so niedrigen Gehalt an Stickstoff, dass der heizwertmindernde Einfluss des Kohlendioxids weitaus überkompensiert wird. Außerdem läßt sich das Kohlendioxid auf bekannte und einfache Weise aus dem Gas entfernen, so dass sich dadurch aus dem Schwachgas "Holzgas" ein Mittelgas mit einem höheren Marktwert gewinnen lassen könnte.

Eine günstige Ausführungsform besteht darin, dass die heiße Luft in einen Haupt- und einen Nebenstrom geteilt wird, wobei der Nebenstrom ein Zehntel bis ein Viertel des Gesamtstromes ausmacht und unterhalb, der Hauptstrom dagegen oberhalb, des Rohgasaustritts im unteren Teil des Reaktors eingedüst wird.

Erfindungsgemäß lässt sich das Verfahren zur Erzeugung von Brenngasen aus Biomassen, insbesondere aus Holz, in einem zylindrischen Festbett-Vergasungsreaktor für absteigende Gleichstromvergasung in zwei verschiedenen typischen Varianten durchführen, deren erste für eine stärker oxidierende und deren zweite für eine stärker hydrierende Prozessführung günstig ist.

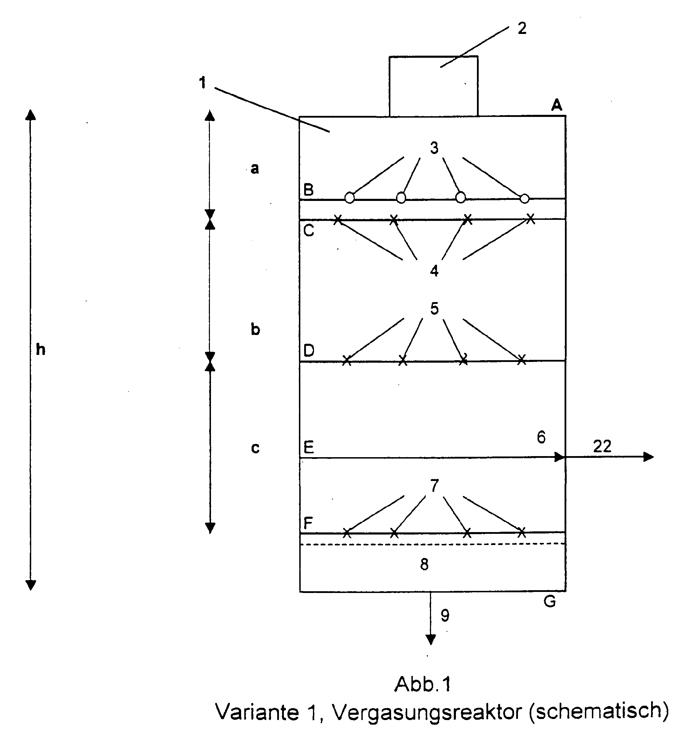

Die erste Variante wird in Abbildung 1 schematisch dargestellt.

Darin bedeuten:
- 1: Vergasungsreaktor ingesamt
- 2: Materialeintragschleuse im Vergasungsreaktor
- 3: Heißdampfdüsen im Vergasungsreaktor
- 4,5,7: Heißluftdüsen im Vergasungsreaktor
- 6: Rohgasaustritt im Vergasungsreaktor
- 8: Aschesammler im Vergasungsreaktor
- 9: Ascheaustrag
- 22: Rohgasableitung aus dem Reaktor

Der Vergasungsreaktor mit der Höhe h besitzt die folgenden - von oben nach unten vorhandenen - Merkmale:
- Materialeintragsschleuse 2 im obersten Teil (Position A)
- Heißdampfdüsen 3 im oberen Teil (Position B)
- darunter liegende Heißluftdüsen 4 im oberen Teil (Position C)
- zusätzliche Heißluftdüsen 5 im mittleren Bereich
- Gasaustritt 6 im unteren Teil (Position E) und
- Aschesammler 8 und -austritt 9 im untersten Teil (oberhalb Position G)
- ggfs. weiteren Heißluftdüsen 7 (im unteren Teil/Position E) zwischen
- Gasaustrittsventil 6 und Ascheaustritt 9 (Position G) und
- einem (gestrichelt eingezeichneten) Ascherost zwischen den Positionen E und F und G.

Zweckmäßig ist der Vergasungsreaktor so ausgebildet, dass
a) die Position der oberen Heißluftdüse 4 und die Position der mittleren Heißluftdüsen 5 einen Abstand b haben, der das 2,3-fache bis 2,7-fache des Abstandes a der Position A der Materialeintragsschleuse 2 und der Position E der oberen Heißluftdüsen 4 und
b) der Abstand a + b der Position A der Materialeintragsschleuse 2 und der Position D der mittleren Heißluftdüse 5 0,4 bis 0,5 der Höhe h des Vergasers
betragen.

Dieser Vergasungsreaktor ist in einer bevorzugten Ausgestaltungsform der Erfindung als Gleichstromvergaser mit absteigender Vergasung ausgeführt, in den die vorgewärmte dotierte Biomasse durch die Eingabeschleuse 2 gelangt, die an der Stelle A des Reaktors, also an dessen oberen Ende, angeordnet ist. Sie tritt damit nach einer kurzen Pufferzone unmittelbar in die Thermolysezone ein, in die durch die Düsen 3 an der Position B und 4 an der Position C heißer Dampf und/oder andere heiße Gasmedien zudosiert wird, wobei der Reaktor insgesamt die Höhe h hat. Die genannten Medien besitzen Temperaturen von 300 °C bis 600 °C und erhitzen die Biomasse auf 230 bis 450 °C, zweckmäßig auf 280 bis 350 °C. Mit dieser Maßnahme wird der Ablauf der gesamten Thermolyse erreicht, und es verbleibt ein reaktiver Koks in einer deutlich größeren Menge als dies bei einer Pyrolyse nach dem Stand der Technik der Fall ist und ebenso entstehen deutlich mehr niedermolekulare Gase als erwartet.

Das feste Produkt der Thermolyse ist ein reaktiver Koks, der nun im Reaktor 1 in die Oxidationszone sinkt. An der Position D tritt durch die Heißluftdüsen 5 heiße Luft, deren Temperatur aber erfindungsgemäß nicht entscheidend ist, in einer Menge von 10 bis 30 Vol.-%, vorzugsweise 20 bis 25 Vol.-%, des austretenden Rohgasstromes, auf gleiche Bedingungen bezogen, ein, wodurch der Koks auf höchstens 900 °C aufgeheizt wird. Diese Temperatur ist aber unter den erfindungsgemäßen Bedingungen vollständig ausreichend. Durch die dadurch mögliche Absenkung der Vergasungstemperatur um mehrere hundert Kelvin wird auch entscheidend weniger Energie verbraucht als nach Verfahren entsprechend dem Stand der Technik, was zur Erhöhung des Vergasungswirkungsgrades beiträgt.

Die Abbildung 1 zeigt die Ausführung, dass bei einem Vergasungsreaktor mit weiteren Heißluftdüsen 7 in der Position F (Doppelfeuervergaser) der Abstand c der Position der mittleren Heißluftdüsen 5 und der Position der unteren Heißluftdüsen 7 das 0,8- bis 1,3-fache des Abstandes b zwischen den Positionen der oberen Heißluftdüsen 6 und den mittleren Heißluftdüsen 7 beträgt, wobei der Gasaustritt 6 an der Stelle E etwa in der Mitte zwischen F und D liegt.

Die Gestaltung der Zufuhr von Dampf und Luft an den Positionen B und C bleibt gegenüber der erstgenannten Ausführungsform ungeändert, dagegen teilt sich die Zugabe heißer Luft auf zwei Stellen auf, so beträgt die Zugabe heißer Luft an der Position 5 vorzugsweise 10 bis 20 Vol.-% und an der Position F durch die Düsen 7 5 bis 10 Vol.-% des austretenden Rohgasstromes, bezogen auf die gleichen Bedingungen. Durch diese Gestaltung wird die Ausnutzung des Brennstoffs noch verbessert, und die Betriebsbedingungen werden homogenisiert.

Die zweite Variante der stärker hydrierenden Prozessführung ist in Abb. 2 schematisch dargestellt.

Dabei bedeuten die Bezugszeichen:
- 1: - Vergasungsreaktor insgesamt
- 2: - (äußere) Materialeintragsschleuse
- 2 a: - (innere) Materialeintragsschleuse
- 3 a: - Dampfeintrittsdüsenring
- 3 b: - Dampfaustrittsdüsenring
- 4 a: - Luftzuleitung
- 5 a: - Düsenring für Eintritt Lufthauptstrom
- 6: - Austritt Rohgas
- 6 a: - Aufteilung Rohgasstrom
- 6 b: - Eindüsung Rohgasnebenstrom im Reaktor
- 7 a: - Eintritt Luftnebenstrom
- 8: - Ascheraum
- 9: - Ascheaustrag
- 22: - Rohgasableitung aus dem Reaktor

Dieser Reaktor ist ebenfalls eine Vorrichtung zur Erzeugung von Brenngasen aus Biomassen, insbesondere aus Holz, zur Festbettvergasung von Biomassen mit Wasserdampf und Luft als Vergasungsmittel in Form eines Gleichstromvergasungsreaktors mit Materialeintragsschleuse 2 am obersten Teil, Heißdampfdüsen 3 im oberen Teil, Heißluftdüsen 4, 5, 7 im unteren Teil, Rohgasaustritt 6 im unteren Teil und Aschesammler 8 und -austritt 9 im untersten Teil, unterscheidet sich aber von Variante 1 insbesondere dadurch, dass
- der Reaktor im oberen Teil zylindrisch ausgebildet ist, sich dann nach unten konisch erweitert, im mittleren Teil wieder zylindrisch ist, sich der innere Teil dann konisch nach unten verjüngt, der untere Teil wiederum zylindrisch ist und danach wieder konisch erweitert,
- sich zwischen oberem zylindrischen Teil und der anschließenden konischen Erweitertung eine zusätzliche (innere) Materialschleuse 2 a befindet,
- der Reaktor unterhalb der oberen konischen Erweiterung von einem äußeren zylindrischen Mantel umgeben ist,
- so dass das bei 6 austretende Rohgas zwischen innerer und äußerer Reaktorwandung des mittleren Teils nach oben strömen kann und ein Teil durch Düsen 6 b in den oberen Teil des Reaktors gelangt, während der andere Teil durch eine Rohgasableitung den Reaktor verläßt,
- und sich eine Luftzuleitung 4 a in der konischen Verjüngung des mittleren Reaktorteils befindet, wobei die Luft über den Düsenring 5 a in den darüber liegenden Reaktorteil gelangt und ggfs. durch eine zusätzliche Luftzuleitung 7 a in der unteren konischen Erweiterung im unteren Reaktorteil Luft eingeführt wird.

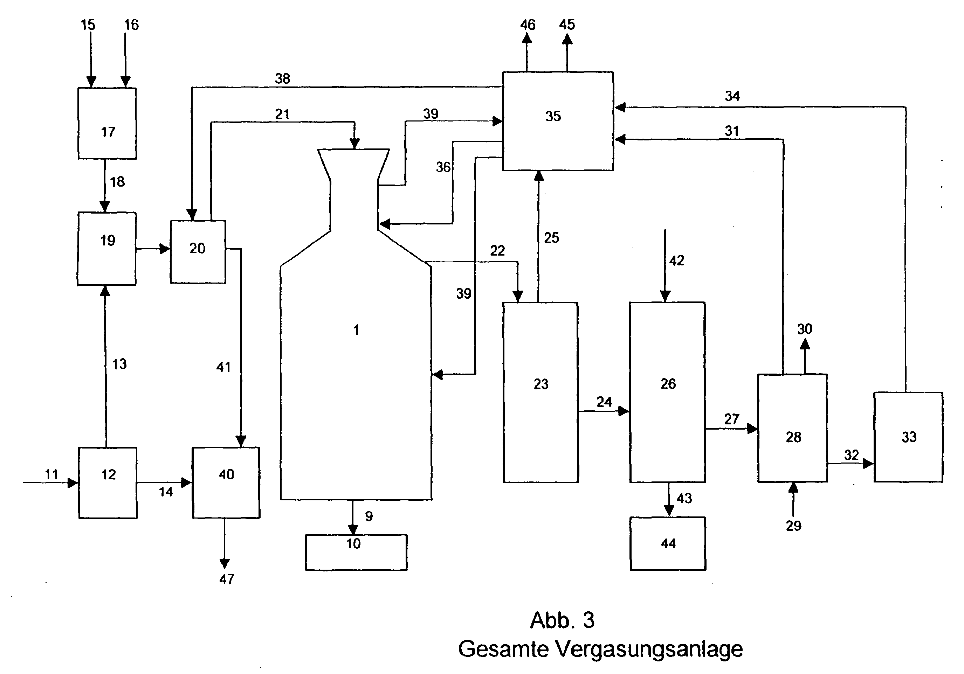

Ein Schema für den Ablauf des erfindungsgemäßen Verfahrens einschließlich der Brenngasreinigung und Energienutzung zeigt Abb. 3. Darin bedeuten:
- 1: - Vergasungsreaktor insgesamt
- 9: - Ascheaustrag
- 10: - Aschebehälter
- 11: - Materialanlieferung
- 12: - Materialzerkleinerungsanlage
- 13: - gestücktes Material
- 14: - Abluft aus Zerkleinerungsanlage
- 15: - Katalysatorkomponenten
- 16: - Zumischungen
- 17: - Mischkatalysatorherstellung
- 18: - Mischkatalysatoreintrag
- 19: - Einrichtung für die Dotierung
- 20: - Konditionierung
- 21: - Eintrag des dotierten Materials
- 22: - Rohgasableitung aus dem Vergasungsreaktor
- 23: - Rohgaskühler
- 24: - gekühltes Rohgas
- 25: - Abwärme aus Gaskühler
- 26: - Gaswäscher
- 27: - Reingas
- 28: - Motor-Generator-Station
- 29: - Verbrennungszuluft
- 30: - Strom in das Netz
- 31: - Motorabwärme
- 32: - heißes Abgas
- 33: - Nachbrennkammer mit Katalysator
- 34: - gereinigtes heißes Abgas
- 35: - Abhitzenutzungsstation
- 36: - Heißdampf zum Vergaser
- 37: - Heißluft zum Vergaser
- 38: - Medienzufuhr zum Konditionierer
- 39: - Dampfrückfluss
- 40: - Abluftfilter
- 41: - Abluft aus Konditionierer
- 42: - Waschwasserzufluss
- 43: - Waschwasseraustrag
- 44: - Waschwasseraufbereitung
- 45: - Überschusswärme zum Verbraucher
- 46: - gereinigtes abgekühltes Abgas
- 47: - gereinigte Abluft

Ein besonderer Vorteil der Erfindung ist es, dass der gesamte komplizierte Vorgang der Vergasung in einer Stufe, also einem Einstufenfestbettreaktor, durchgeführt werden kann. Dadurch werden Investkosten eingespart. In einem Schritt wird ein sehr reines heizwertreiches Gas erzeugt, das auf Grund der erfindungsgemäßen katalytisch-partiellallothermen Steuerung gegenüber den bisher bekannten Verfahren mit einer nur etwa halb so großen Menge des Vergasungsmittels Luft auskommt, wodurch das erzeugte Brenngas nur etwa die Hälfte der üblichen Stickstoffmengen enthält. Außerdem wird auf diese Weise der CO₂-Ausstoß in die Atmosphäre reduziert.

Die Erfindung wird in den nachfolgenden Beispielen näher beschrieben, ohne auf diese beschränkt zu sein.

### Beispiel 1

Eine größere Menge eines gebrochenen Altholzes, dessen Splitter eine mittlere Länge von 4 cm hatten, wurden in einem Trommelmischer mit konzentrierter Sodalösung beaufschlagt und mit dem heißen Abgas eines Gasmotors auf einen Restwassergehalt von 12 Masse-% getrocknet und mit einer Temperatur von 105 °C über die Materialeingabeschleuse 2 in den Reaktor nach Abb. 1 eingegeben. Das getrocknete Holz wies eine Konzentration von 0,8 Masse-% Na₂CO₃ auf und wurde kontinuierlich mit einer Menge von 50 kg/h in den Reaktor eingeschleust.

Durch die Dampfdüsen 3 an der Stelle B wurden 7 kg/h Dampf von 400 °C und durch die Luftdüsen 4 an der Stelle C 10 Nm³/h Luft von 500 °C zugegeben. In der Mitte des Reaktors kurz unterhalb der Höhe C wurde eine Temperatur von 305 °C gemessen. Durch die unteren Luftdüsen 5 an der Stelle D wurden 18 Nm³/h heiße Luft eingedüst.

Am Gasaustritt 6 an der Stelle E traten 95 Nm³/h Rohgas aus, korrigiert auf den Wasserdampfgehalt. Das Brenngas war nach Reinigung und Trocknung voll motorfähig. Es hatte eine Zusammensetzung (in Vol.-%) von 29 H₂, 26 CO, 4 CH₄, 1 C₂-C₇, 14 CO₂, 27 N₂, woraus sich ein Heizwert Hᵤ = 8,4 MJ/Nm³ errechnet.

### Beispiel 2

Aus Holzspänen hergestellte Presslinge in Form von 4 cm starken Pellets wurden mit einer Slurry aus dem anorganischen Anteil eines Ablaufs dotiert, dessen Eindampfrückstand auf die Oxide umgerechnet und normiert (in Masse-%) 55 Na₂O, 12 K₂O, 20 CaO, 3 MgO, 5 Fe₂O₃ (Rest Al₂O₃, SiO₂, TiO₂, Spuren Schwermetalle wie Mn, Zn, Cu, Pb, Cr) enthielt. Nach der Trocknung auf einen Restwassergehalt von 8 Masse-% machten die Zusätze, auf die Trockensubstanzen bezogen, 2,1 Masse-% aus. Die dotierten Pellets wurden in Mengen von 50 kg/h mit einer Temperatur von 120 °C über die Materialeintragsschleuse 2 in einen Reaktor entsprechend Abb. 1 eingetragen.

Über die Heißdampfdüsen 3 wurden 16 kg/h Dampf von 500 °C und 15 Nm³/h Luft von 550 °C über die oberen Luftdüsen 4 zugegeben. In der Mitte des Reaktors, kurz unterhalb der Stelle C, wurde eine Temperatur von 350 °C gemessen. Durch die mittleren Luftdüsen 5 und die unteren Luftdüsen 7 wurden 12 bzw. 6 Nm³/h heiße Luft zugegeben.

Am Gasaustritt 6 traten 108 Nm³/h heißes Rohgas aus, korrigiert auf den Wasserdampfgehalt. Es war nach Reinigung und Trocknung voll motorfähig und hatte eine Zusammensetzung (in Vol.-%) von 30 H₂, 24 CO, 5 CH₄, 2 C₂-C₇, 15 CO₂, 24 N₂, woraus sich ein Heizwert von Hᵤ = 8,9 MJ/Nm³ errechnet.

### Beispiel 3 (Vergleichsbeispiel)

Zum Vergleich wurden Pellets analog Beispiel 2 ohne Dotierung und ohne Trocknung mit einem Wassergehalt von 20 Masse-% in einen Doppelfeuervergaser ohne die oberen Luft- und Wasserdampfdüsen gegeben, wobei nur ein Durchsatz von 30 kg/h erreicht wurde. Durch die Luftdüsen in der Mitte des Reaktors und in seinem unteren Teil strömten 25 bzw. 15 Nm³/h vorgewärmte Luft zu. Am Gasaustritt traten 55 Nm³/h Rohgas, korrigiert auf den Wasserdampfgehalt, aus, das nach Reinigung motorfähig war. Es hatte eine Zusammensetzung von (in Vol.-%) 13 H₂, 17 CO, 2 C₁-C₅ (fast nur CH₄), 13 CO₂, 55 N₂, woraus sich ein Heizwert von Hᵤ = 4,3 MJ/Nm³ errechnet.

### Beispiel 4

Lufttrockene Altholzschnitzel mit einer mittleren Länge von 4 cm wurden in einem Trommelmischer mit einer Slurry aus konzentrierter Sodalösung und einem mineralischen Schlamm beaufschlagt. Das so behandelte Holz wies eine Feuchtigkeit von 36 % Wasser auf und einen Gehalt an den erfindungsmäßig relevanten Stoffen von 0,7 Masse-% Na₂O, 0,4 Masse-% CaO und 0,3 Masse-% Fe₂O₃, bezogen auf die Trockenmasse und auf die Metalloxide umgerechnet.

Dieses Material wurde in einer Menge von 50 kg/h über die Materialeingabeschleuse 2 in den Reaktor gemäß Abb. 2 eingegeben und mit überhitztem Wasserdampf bis auf einen Restwassergehalt von 24 Masse-% getrocknet und dabei auf 160 °C erhitzt.

Durch die Luftdüsen 5 a an der Stelle C wurden 10 Nm³/h vorerhitzte Luft und im Nebenstrom oberhalb der Stelle D durch die Düsen 7 a nochmals 1 Nm³/h heiße Luft zugeführt.

Am Gasaustritt 6 zwischen C' und D' traten nach Erreichen des stationären Zustandes 100 Nm³/h heißes Rohgas aus, korrigiert auf den Wasserdampfgehalt. Davon wurden 21 Nm³/h nach Aufteilung des Rohgasstromes an der Stelle 6 a dem Reaktor wieder zugeführt, 89 Nm³/h wurden ausgekreist und weiterbehandelt.

Das Brenngas war nach Reinigung und Trocknung voll motorfähig. Es hatte eine Zusammensetzung (in Vol.-%) von 31,4 H₂, 10,2 CO, 11,0 CH₄, 1,7 C₂-C₇, 26,3 CO₂, 19,4 N₂, woraus sich ein Heizwert Hᵤ = 9,6 MJ/Nm³ errechnet.

### Beispiel 5

Aus Biomasse hergestellte Presslinge in Form von 3 bis 5 cm starken Pellets wurden mit einer Slurry, deren Eindampfrückstand auf die Oxide der erfindungsrevelanten Elemente umgerechnet und normiert (in Masse-%) 45 Na₂O, 17 K₂O, 23 CaO, 13 MgO, 8 Fe₂O₃ und 1 NiO enthielt. Die Summe dieser Zusätze, auf die Trockensubstanzen bezogen, betrug 2,3 Masse-%.

Die dotierten Pellets, die 31 Masse-% Wasser enthielten, wurden in Mengen von 60 kg/h über die Materialeintragsschleuse 2 in den Reaktor entsprechend Abb. 2 eingetragen und mit überhitztem Wasserdampf auf einen Restgehalt von 23 Masse-% Wasser getrocknet und damit auf 175 °C erhitzt.

Durch die Luftdüsen 5 a an der Stelle C wurden 8 Nm³/h vorerhitzte Luft und im Nebenstrom oberhalb der Stelle D durch die Düsen 7 a nochmals 1 Nm³/h heiße Luft zugeführt.

Am Gasaustritt 9 zwischen C' und D' traten nach Erreichen des stationären Zustandes 180 Nm³/h heißes Rohgas aus, korrigiert auf den Wasserdampfgehalt. Davon wurden 94 Nm³/h nach Aufteilung des Rohgasstromes an der Stelle 6 a dem Reaktor wieder zugeführt, 66 Nm³/h wurden ausgekreist und weiterbehandelt.

Das Brenngas war nach Reinigung und Trocknung voll motorfähig. Es hatte eine Zusammensetzung (in Vol.-%) von 30,4 H₂, 10,6 CO, 14,7 CH₄, 1,9 C₂-C₇, 28,0 CO₂, 14,4 N₂, woraus sich ein Heizwert Hᵤ = 11,2 MJ/Nm³ errechnet.

## Patentansprüche

1. Verfahren zur Erzeugung eines Brenngases aus Biomassen, insbesondere Holz, in einem Festbettvergasungsreaktor mit Wasserdampf und Luft als Vergasungsmittel unter Normaldruck, **dadurch gekennzeichnet, dass**
- die Biomasse mit einem anorganischen Mischkatalysator versetzt wird
- die dotierte Biomasse innerhalb oder außerhalb des Reaktors auf einen Restwassergehalt zwischen 18 und 32 Masse-% konditioniert und dabei auf Temperaturen bis 120 °C vorgewärmt wird,
- die Biomasse im oberen Teil des Reaktors mit Heißdampf und/oder anderen heißen Medien auf 125 bis 195 °C aufgeheizt und dabei ein Wassergehalt von 18 bis 32 Masse-%, bezogen auf die Trockensubstanz der Biomasse, eingestellt wird,
- die Biomasse weiter
**entweder** mit heißen Gasmedien auf 250 bis 480 °C aufgeheizt wird, wobei die Menge des darin enthaltenen Luftstroms 5 bis 20 Vol.-% des austretenden Rohgasstromes, auf gleiche Bedingungen umgerechnet, beträgt (stärker oxidierende Prozessführung)
**oder** das im unteren Teil des Reaktors abgenommene Rohgas zum Teil wieder in den oberen Bereich des Reaktors eingeführt und die Biomasse auf 250 bis 580 °C erhitzt wird (stärker hydrierende Prozessführung) und
- anschließend die als Koks verbleibende Biomasse
im unteren Teil des Reaktors durch Zugabe heißer Luft
- in Mengen von 5 bis 25 Vol.-% des austretenden Rohgasstromes, auf gleiche Bedingungen bezogen,
- bis höchstens 900 °C erhitzt und
- der im Reaktor abgenommene und nicht wieder eingeführte Teil des Rohgases zu Brenngas gereinigt wird.

2. Verfahren zur Erzeugung eines Brenngases aus Biomassen nach Anspruch 1, **dadurch gekennzeichnet, dass** der feuchten oder getrockneten Biomasse anorganischer Mischkatalysator als wässrige Lösung, als Slurry oder feste Mischung in solcher Menge zugegeben wird, dass der Anteil des Mischkatalysators an der so dotierten Biomasse 0,1 bis 5 Masse-% beträgt, bezogen auf die Trockensubstanz der Biomasse.

3. Verfahren zur Erzeugung eines Brenngases aus Biomassen nach Anspruch 1 und 2, **dadurch gekennzeichnet, dass** als anorganische Mischkatalysatoren Gemische von Verbindungen der I. und II. Hauptgruppe des Periodensystems der Elemente (PSE) und/oder der VIII. Nebengruppe des PSE verwendet werden.

4. Verfahren zur Erzeugung eines Brenngases aus Biomassen nach einem oder mehreren der Ansprüche 1 bis 3, **dadurch gekennzeichnet, dass** der Anteil der Verbindungen der I. und II. Hauptgruppe des PSE mindestens das Dreifache des entsprechenden Anteils der Verbindungen der VIII. Nebengruppe des PSE beträgt und der Anteil der Verbindungen der Nebengruppenelemente wenigstens ein Zehntel ausmacht.

5. Verfahren zur Erzeugung eines Brenngases aus Biomassen nach einem oder mehreren der Ansprüche 1 bis 4, **dadurch gekennzeichnet, dass** beim anorganischen Mischkatalysator der Anteil der Verbindungen der I. Hauptgruppe des PSE wenigstens das Doppelte der Verbindungen der Nebengruppenelemente und wenigstens die Hälfte der Verbindungen aus Elementen der II. Hauptgruppe des PSE ausmacht, gerechnet nach ihren Masseanteilen.

6. Verfahren zur Erzeugung eines Brenngases aus Biomassen nach einem oder mehreren der Ansprüche 1 bis 5, **dadurch gekennzeichnet, dass** der Mischkatalysator anorganische Zuschläge, vorzugsweise Vergasungsasche aus dem Reaktor, enthält.

7. Verfahren zur Erzeugung eines Brenngases aus Biomassen nach einem oder mehreren der Ansprüche 1 bis 6, **dadurch gekennzeichnet, dass** die dotierte Biomasse im oberen Teil des Reaktors durch Zufuhr von überhitztem Wasserdampf auf 150 bis 180 °C aufgeheizt und dabei ein Wassergehalt von 22 bis 28 Masse-% eingestellt wird.

8. Verfahren zur Erzeugung eines Brenngases aus Biomassen nach einem oder mehreren der Ansprüche 1 bis 7, **dadurch gekennzeichnet, dass** bei der stärker oxidierenden Prozessführung die Biomasse im oberen Teil des Reaktors durch kontrollierte Zufuhr heißer Luft weiter auf 300 °C bis 450 °C aufgeheizt wird, wobei die Luft wenigstens 300 °C heiß ist und die Menge des eintretenden Luftstromes 5 bis 15 Vol.-% des austretenden Rohgasstromes, auf gleiche Bedingungen bezogen, beträgt.

9. Verfahren zur Erzeugung eines Brenngases aus Biomassen nach einem oder mehreren der Ansprüche 1 bis 7, **dadurch gekennzeichnet, dass** bei der stärker hydrierenden Prozessführung der aus dem unteren Bereich des Reaktors abgeführte heiße Rohgasstrom in zwei Teilströme geteilt und ein Teilstrom von 10 bis 70 Vol.-% des Gesamtstromes dem oberen Teil des Reaktors unterhalb der Trocknungszone wieder zugeführt wird.

10. Verfahren zur Erzeugung eines Brenngases aus Biomassen nach einem oder mehreren der Ansprüche 1 bis 9, **dadurch gekennzeichnet, dass** in den unteren Teil des Reaktors kontrolliert heiße Luft eingeleitet wird, deren Gesamtmenge 5 bis 25 Vol.-%, vorzugsweise 10 bis 12 Vol.-% der Rohgasmenge, bezogen auf gleiche Bedingungen, beträgt.

11. Verfahren zur Erzeugung eines Brenngases aus Biomassen nach einem oder mehreren der Ansprüche 1 bis 10, **dadurch gekennzeichnet, dass** die in den unteren Teil des Reaktors eingeleitete Luft in einen Haupt- und einen Nebenstrom geteilt wird, wobei der Nebenstrom ein Zehntel bis ein Viertel des Gesamtstromes ausmacht und unterhalb, der Hauptstrom dagegen oberhalb des Rohgasstromes im unteren Teil des Reaktors eingedüst wird.

12. Vorrichtung zur Erzeugung eines Brenngases aus Biomassen, insbesondere aus Holz, zur Festbettvergasung von Biomasse mit Wasserdampf und Luft mit stärker oxidierender Prozessführung in Form eines zylindrischen modifizierten Gleichstromvergasers für absteigende Vergasung mit der Höhe h, **gekennzeichnet durch** folgende - von oben nach unten vorhandene - Merkmale:
- Materialeintragsschleuse (2) am obersten Teil (Position A),
- Heißdampfdüsen (3) im oberen Teil (Position B),
- darunter liegenden Heißluftdüsen (4) im oberen Teil (Position C),
- zusätzlichen Heißluftdüsen (5) im mittleren Teil (Position D),
- Gasaustritt (6) im unteren Teil (Positon E) und
- Aschesammler (8) und -austritt (9) im untersten Teil (oberhalb Position G) und ggfs. weiteren Heißluftdüsen (7) im unteren Teil (Position F) zwischen Gasaustritt (6) und Ascheaustritt (9) (Position G).

13. Vorrichtung bzw. Vergasungsreaktor zur Erzeugung eines Brenngases aus Biomassen nach Anspruch 12, **dadurch gekennzeichnet, dass**
a) die Position der oberen Heißluftdüsen 4 und die Position der mittleren Heißluftdüsen 5 einen Abstand b haben, der das 2,3- bis 2,7-fache des Abstandes a der Position A der Materialeintragsschleuse 2 und der Position C der oberen Heißluftdüsen 4 und
b) der Abstand a + b der Position A der Materialeintragsschleuse 2 und der Position D der mittleren Heißluftdüsen 5 0,4 bis 0,5 der Höhe h des Vergasers betragen.

14. Vorrichtung bzw. Vergasungsreaktor zur Erzeugung eines Brenngases aus Biomassen nach Anspruch 12 und 13, **dadurch gekennzeichnet, dass** im Falle eines Gleichstromvergasers mit weiteren Heißluftdüsen 7 in der Position F (Doppelfeuervergaser) der Abstand c der Position der mittleren Heißluftdüsen 5 und der Position der unteren Heißluftdüsen 7 das 0,8- bis 1,3-fache des Abstandes b zwischen den Positionen der oberen Heißluftdüsen 4 und den mittleren Heißluftdüsen beträgt, wobei der Gasaustritt 6 an der Stelle E etwa in der Mitte zwischen D und F liegt.

15. Vorrichtung zur Erzeugung eines Brenngases aus Biomassen, insbesondere aus Holz, zur Festbettvergasung von Biomassen mit Wasserdampf und Luft als Vergasungsmittel in Form eines Gleichstromvergasungsreaktors mit stärker hydrierender Prozessführung bzw. mit teilweiser Rückführung des Rohgasstromes, **gekennzeichnet durch** folgende -von oben nach unten vorhandene - Merkmale:
- (äußere) Materialeintragsschleuse (2) am obersten Teil,
- Heißdampfdüsen (3) im oberen Teil,
- darunter liegenden Heißluftdüsen und
- Aschesammler (8) und -austritt (9), wobei
- der Reaktor im oberen Teil zylindrisch ausgebildet ist, sich dann nach unten konisch erweitert, im mittleren Teil wieder zylindrisch ist, sich der innere Teil dann konisch nach unten verjüngt, der untere Teil wiederum zylindrisch ist und danach wieder konisch erweitert,
- sich zwischen oberem zylindrischen Teil und der anschließenden konischen Erweiterung eine zusätzliche (innere) Materialeintragsschleuse (2 a) befindet,
- der Reaktor unterhalb der oberen konischen Erweiterung von einem äußeren zylindrischen Mantel umgeben ist.
- so dass das bei (6) austretende Rohgas zwischen innerer und äußerer Reaktorwandung des mittleren Teils nach oben strömen kann und ein Teil **durch** Düsen (6 b) in den oberen Teil des Reaktors gelangt, während der andere Teil **durch** eine Rohgasableitung (22) den Reaktor verläßt,
- und sich eine Luftzuleitung (4 a) in der konischen Verjüngung des mittleren Reaktorteils und ggf. eine zusätzliche Luftzuleitung (7 a) in der unteren konischen Erweiterung unter dem unteren Reaktorteil befinden, wobei die Luft über den Düsenring (5 a) in den darüber liegenden Reaktorteil gelangt.

## Claims

1. A method for producing a fuel gas from biomasses, in particular wood, in a fixed-bed gasification reactor with water steam and air as gasification agents at standard pressure, **characterized in that**
- the biomass is mixed with an inorganic mixed catalyst,
- the doped biomass is conditioned to a residual water content between 18 and 32 percent by weight inside or outside of the reactor and simultaneously being preheated up to temperatures of 120 °C,
- the biomass is heated up to 125 to 195 °C with superheated steam and/or other hot agents in the upper part of the reactor and the content of water is adjusted to 18 to 32 percent by weight relative to the dry substance of the biomass,
- the biomass is further
either heated to 250 to 480 °C with hot gas mediums, whereas the escaping raw gas flow is containing an amount of air flow of 5 to 20 percent by volume converted to equal conditions (process control providing a higher degree of oxidation)
or the raw gas removed in the lower part of the reactor is fed again partially into the upper part of the reactor and the biomass is heated to 250 to 580 °C (process control providing a higher degree of hydrogenation) and
- subsequently the remaining biomass in the form of coke is heated in the lower part of the reactor by adding hot air
- in amounts of the escaping raw gas flow of 5 to 20 percent by volume with reference to equal conditions
- heated up to 900 °C and
- the portion of the raw gas removed from the reactor and not fed again is cleaned to fuel gas.

2. The method for producing a fuel gas from biomasses according to claim 1, **characterized in that** the inorganic mixed catalyst is added to the moist or dehumidified biomass as an aqueous solution, a slurry or a solid mixture in such an amount that the portion of the mixed catalyst of the such doped biomass is 0,1 to 5 percent by weight with reference to the dry substance of the biomass.

3. The method for producing a fuel gas from biomasses according to claim 1 and 2, **characterized in that** mixtures of compounds of the I. and II. main group of the periodic chart of elements (PCE) and/or of the VIII. side group of the PCE are used as inorganic mixed catalysts.

4. The method for producing a fuel gas from biomasses according to one or several of claims 1 to 3, **characterized in that** the amount of the compounds of the I. and II. main group of the PCE is at least the triple of the corresponding amount of the compounds of the VIII. side group of the PCE and the portion of the compounds of the side group elements is at least a tenth.

5. The method for producing a fuel gas from biomasses according to one or several of claims 1 to 4, **characterized in that** the amount of the compounds of the I. main group of the PCE of the inorganic mixed catalyst is at least the double of the compounds of the side group elements and at least half of the compounds of the elements of the II. main group of the PCE, calculated according to their mass fractions.

6. The method for producing a fuel gas from biomasses according to one or several of claims 1 to 5, **characterized in that** the mixed catalyst contains inorganic additives, preferably gasification ash from the reactor.

7. The method for producing a fuel gas from biomasses according to one or several of claims 1 to 6, **characterized in that** the doped biomass is heated to 150 to 180 °C in the upper part of the reactor by injection of superheated water steam and simultaneously the concentration of water is adjusted to 22 to 28 percent by mass.

8. The method for producing a fuel gas from biomasses according to one or several of claims 1 to 7, **characterized in that** if the process control provides a higher degree of oxidation, the biomass will be further heated to 300°C to 450°C in the upper part of the reactor by controlled injection of hot air, whereas the temperature of the air will be at least 300°C and the amount of the entering air flow will be 5 to 15 percent by volume of the escaping raw gas flow, with reference to equal conditions.

9. The method for producing a fuel gas from biomasses according to one or several of claims 1 to 7, **characterized in that** if the process control provides a higher degree of hydrogenation, the hot raw gas flow removed in the lower part of the reactor will be divided into two partial flows and one partial flow consisting of 10 to 70 percent by volume of the overall flow will be fed again into the upper part of the reactor beneath the drying zone.

10. The method for producing a fuel gas from biomasses according to one or several of claims 1 to 9, **characterized in that** in the lower part of the reactor hot air is injected under control, the overall amount being 5 to 25 percent by volume, preferably 10 to 12 percent by volume of the amount of the raw gas, with reference to equal conditions.

11. The method for producing a fuel gas from biomasses according to one or several of claims 1 to 10, **characterized in that** the air injected into the lower part of the reactor is divided in a main flow and a side flow, the side flow being a tenth to a fourth of the overall flow and being injected beneath the raw gas flow whereas the main flow being injected above the raw gas flow into the lower part of the reactor.

12. A device for producing a fuel gas from biomasses, in particular wood, for the fixed-bed gasification of biomass with water steam and air using a process control providing a higher degree of oxidation, in the form of a cylindric modified direct current gasifier for descending gasification with a height (h), **characterized by** the following criteria located top down:
- a material entry sluice (2) in the uppermost part (position A)
- hot-steam nozzles (3) in the upper part (position B)
- beneath located hot-air nozzles (4) in the upper part (position C)
- additional hot-air nozzles (5) in the middle part (position D)
- a gas exit (6) in the lower part (position E) and
- an ash collector (8) and an ash exit (9) in the lowest part (above position G) and, if necessary, additional hot-air nozzles (7) in the lower part (position F) between the gas exit (6) and the ash exit (9) (position G).

13. The device and a gasification reactor, respectively, for producing a fuel gas from biomasses according to claim 12, **characterized in that**
a) the distance b between the position of the upper hot-air nozzles 4 and the position of the middle hot-air nozzles 5 is 2.3 to 2.7 fold of the distance a between position A of the material entry sluice 2 and position C of the upper hot-air nozzles 4 and
b) that the distance a + b between position A of the material entry sluice 2 and position D of the middle hot-air nozzles 5 is 0.4 to 0.5 fold of the height h of the gasifier.

14. The device and the gasification reactor, respectively, for producing a fuel gas from biomasses, according to claim 12 and 13, **characterized in that** the distance c of the position of the middle hot-air nozzles 5 and the position of the lower hot-air nozzles 7 in case of a direct current gasifier with additional hot-air nozzles 7 in position F (double fire gasifier) is 0.8 to 1.3 fold of the distance b between the position of the upper hot-air nozzles 4 and the middle hot-air nozzles, whereas the gas exit 6 is located at position E at about the middle between D and F.

15. A device for producing a fuel gas from biomasses, in particular wood, for the fixed-bed gasification of biomass with water steam and air as gasification agent in the form of a direct current gasification reactor and a process control providing a higher degree of hydrogenation and a partial refeeding of the raw gas flow, respectively, **characterized in** the following criteria located top down:
- an (external) material entry sluice (2) in the uppermost part,
- hot-steam nozzles (3) in the upper part,
- beneath located hot-air nozzles and
- an ash collector (8) and an ash exit (9), whereas
- the reactor is build cylindrically in the upper part and then extends down conically, the middle part is build cylindrically again and the internal part is then reduced down conically, the lower part is build cylindrically again and extends conically ones again,
- an additional (internal) material entry sluice (2a) is located between the upper cylindrical part und the adjacent conical extension,
- the reactor is surrounded by an external, cylindrical shell beneath the upper conical extension
- the raw gas escaping at (6) between the internal and the external reactor wall of the middle part may flow upwards and a portion reenters the upper part of the reactor by nozzles (6b), whereas the other portion is leaving the reactor by a raw gas conduction (22),
- and an air inlet pipe (4a) is located at the conical diminution in the middle part of the reactor and optionally an additional air inlet pipe (7a) is located at the lower conical extension beneath the lower part of the reactor, whereas the air enters the reactor part located beyond by a nozzle ring (5a).

## Revendications

1. Procédé pour la production d'un gaz combustible à partir de biomasse, en particulier de bois, dans un réacteur de gazéification à lit stationnaire, avec de la vapeur d'eau et de l'air à titre de moyens de gazéification sous pression normale, **caractérisé en ce que**:
- la biomasse est mélangée avec un catalyseur mixte inorganique,
- la biomasse dopée est conditionnée à l'intérieur ou à l'extérieur du réacteur à une teneur résiduelle en eau entre 18 et 32 % en masse et y est préchauffée à des températures jusqu'à 120 °C,
- la biomasse est chauffée dans la partie supérieure du réacteur avec de la vapeur à haute température et/ou d'autres milieux à haute température jusqu'à 125 à 195 °C et on établit ici une teneur en eau de 18 à 32 % en masse, par référence à la substance sèche de la biomasse,
- soit la biomasse est chauffée avec des milieux gazeux à haute température jusqu'à 250 à 480 °C, la quantité du flux d'air contenu dans ces milieux gazeux s'élevant à 5 à 20 % en volume du flux de gaz brut sortant, ramené aux mêmes conditions (pilotage du processus avec plus forte oxydation),
soit le gaz brut prélevé dans la partie inférieure du réacteur est en partie réintroduit dans la zone supérieure du réacteur et la biomasse est chauffée jusqu'à 250 à 580 °C (pilotage des processus avec plus forte hydruration), et
- la biomasse restant sous forme de coke:
- est chauffée dans la partie inférieure du réacteur par addition d'air à haute température,
- dans des quantités de 5 à 25 % en volume du flux de gaz brut sortant, rapportées aux mêmes conditions,
- jusqu'à 900 °C au maximum, et
- la partie des gaz bruts prélevés dans le réacteur et qui n'est pas réintroduite est purifiée pour donner du gaz combustible.

2. Procédé pour la production d'un gaz combustible à partir de biomasse selon la revendication 1, **caractérisé en ce que** l'on additionne à la biomasse humide ou séchée un catalyseur mixte inorganique sous forme de solution aqueuse, de boue, ou de mélange solide, dans une quantité telle que la proportion du catalyseur mixte dans la biomasse ainsi dopée s'élève de 0,1 à 5 % en masse, en se référant à la substance sèche de la biomasse.

3. Procédé pour la production d'un gaz combustible à partir de biomasse selon la revendication 1 et 2, **caractérisé en ce que** l'on utilise à titre de catalyseur mixte inorganique des mélanges de composés du premier et du second groupe principal du système périodique des éléments (système périodique) et/ou du huitième sous-groupe du système périodique.

4. Procédé pour la production d'un gaz combustible à partir de biomasse selon l'une ou plusieurs des revendications 1 à 3, **caractérisé en ce que** la proportion des composés du premier et du second groupe principal du système périodique s'élève au moins à trois fois la proportion correspondante des composés du huitième sous-groupe du système périodique, et la proportion des composés des éléments du sous-groupe représente au moins un dixième.

5. Procédé pour la production d'un gaz combustible à partir de biomasse selon l'une ou plusieurs des revendications 1 à 4, **caractérisé en ce que** dans le catalyseur mixte inorganique, la proportion des composés du premier groupe principal du système périodique représente au moins le double des composés des éléments du sous-groupe, et au moins la moitié des composants des éléments du deuxième groupe principal du système périodique, calculée d'après leur proportion en masse.

6. Procédé pour la production d'un gaz combustible à partir de biomasse selon l'une ou plusieurs des revendications 1 à 5, **caractérisé en ce que** le catalyseur mixte contient des additifs inorganiques, de préférence des cendres de gazéification provenant du réacteur.

7. Procédé pour la production d'un gaz combustible à partir de biomasse selon l'une ou plusieurs des revendications 1 à 6, **caractérisé en ce que** la biomasse dopée est réchauffée dans la partie supérieure du réacteur par admission de vapeur d'eau surchauffée, jusqu'à 150 à 180 °C, et **en ce que** l'on y établit une teneur en eau de 22 à 28 % en masse.

8. Procédé pour la production d'un gaz combustible à partir de biomasse selon l'une ou plusieurs des revendications 1 à 7, **caractérisé en ce que** lors du pilotage du processus à plus forte oxydation, la biomasse est réchauffée jusqu'à 300 à 450 °C dans la partie supérieure du réacteur par admission contrôlée d'air à haute température, l'air ayant une température d'au moins 300 °C, et la quantité du flux d'air entrant s'élève à 5 à 15 % en volume du flux de gaz brut sortant, ramené aux mêmes conditions.

9. Procédé pour la production d'un gaz combustible à partir de biomasse selon l'une ou plusieurs des revendications 1 à 7, **caractérisé en ce que** lors du pilotage du processus à plus forte hydruration, le flux de gaz brut à haute température évacué de la zone inférieure du réacteur est subdivisé en deux flux partiels, et un flux partiel de 10 à 70 % en volume du flux total est ramené à la partie supérieure du réacteur au-dessous de la zone de séchage.

10. Procédé pour la production d'un gaz combustible à partir de biomasse selon l'une ou plusieurs des revendications 1 à 9, **caractérisé en ce que** de l'air à haute température est introduit de manière contrôlée dans la partie inférieure du réacteur, dont la quantité totale s'élève de 5 à 25 % en volume, de préférence 10 à 12 % en volume de la quantité de gaz brut, ramenée aux mêmes conditions.

11. Procédé pour la production d'un gaz combustible à partir de biomasse selon l'une ou plusieurs des revendications 1 à 10, **caractérisé en ce que** l'air introduit dans la partie inférieure du réacteur est subdivisé en un flux principal et en un flux annexe, le flux annexe représentant 1/10 à 1/4 du flux total et étant injecté au-dessous du flux de gaz brut et le flux principal mais cependant étant injecté au-dessus du flux de gaz brut, dans la partie inférieure du réacteur.

12. Appareil pour la production d'un gaz combustible à partir de biomasse, en particulier de bois, pour la gazéification en lit stationnaire de biomasse avec de la vapeur d'eau et de l'air, avec pilotage du processus à plus forte oxydation, sous la forme d'un gazéificateur cylindrique modifié à courants parallèles, pour une gazéification décroissante en fonction de la hauteur (h), **caractérisé par** les caractéristiques techniques suivantes, prévues du haut en bas:
- un sas d'introduction de matériau (2) à la partie la plus haute (position A),
- des buses à vapeur chaude (3) dans la partie supérieure (position B),
- des buses à air chaud (4) dans la partie supérieure (position C), situées sous ces dernières,
- des buses à air chaud additionnelles (5) dans la partie médiane (position D),
- une sortie de gaz (6) dans la partie inférieure (position E), et
- un collecteur de cendres (8) et une sortie de cendres (9) à la partie la plus inférieure (au-dessus de la position G), et le cas échéant d'autres buses à air chaud (7) dans la partie inférieure (position F) entre la sortie de gaz (6) et la sortie de cendres (9) (position G).

13. Appareil, ou respectivement réacteur de gazéification pour la production d'un gaz combustible à partir de biomasse selon la revendication 12, **caractérisé en ce que**
a) la position des buses à air chaud supérieures 4 et la position des buses à air chaud 5 médianes présentent une distance b qui est de 2,3 à 2,7 fois la distance a de la position A du sas d'introduction de matériau 2 à la position C des buses à air chaud supérieures 4, et
b) la distance a + b de la position A du sas d'entrée de matériau 2 à la position D des buses à air chaud médianes 5 s'élève à 0,4 à 0,5 fois la hauteur h du gazéificateur.

14. Appareil, ou respectivement réacteur de gazéification pour la production d'un gaz combustible à partir de biomasse selon la revendication 12 et 13, **caractérisé en ce que**, dans le cas d'un gazéificateur à courants parallèles avec d'autres buses à air chaud 7 dans la position F (gazéificateur à double combustion), la distance c de la position des buses à air chaud médianes 5 à la position des buses à air chaud inférieures 7 s'élève à 0,8 à 1,3 fois la distance b entre les positions des buses à air chaud supérieures 4 et les buses à air chaud médianes, la sortie de gaz 6 étant située à l'emplacement E approximativement au milieu entre D et F.

15. Appareil pour la production d'un gaz combustible à partir de biomasse, en particulier à partir de bois, pour la gazéification en lit stationnaire de biomasse, avec de la vapeur d'eau et de l'air à titre de moyens de gazéification, sous la forme d'un réacteur de gazéification à courants parallèles avec un pilotage de processus à forte hydruration ou respectivement avec recyclage partiel du flux de gaz brut, **caractérisé par** les caractéristiques techniques suivantes, prévues du haut en bas:
- un sas (extérieur) d'introduction de matériau (2) à la partie la plus haute,
- des buses à vapeur chaude (3) dans la partie supérieure,
- des buses à air chaud situées au-dessous, et
- un collecteur de cendres (8) et une sortie de cendres (9), dans lequel
- le réacteur est réalisé cylindrique dans la partie supérieure, puis il va en s'élargissant vers le bas de manière conique, et de nouveau cylindrique dans la partie médiane, la partie intérieure allant ensuite en se rétrécissant vers le bas de manière conique, la partie inférieure étant de nouveau cylindrique, et s'élargit ensuite de nouveau de manière conique,
- un sas additionnel (intérieur) d'introduction de matériau (2a) se trouve entre la partie cylindrique supérieure et l'élargissement conique qui fait suite,
- le réacteur est entouré au-dessous de l'élargissement supérieur conique par une enveloppe extérieure cylindrique,
- de sorte que le gaz brut sortant en (6) entre la paroi intérieure et la paroi extérieure du réacteur dans la partie médiane peut s'écouler vers le haut, et une partie parvient dans la partie supérieure du réacteur par l'intermédiaire de buses (6b), tandis que l'autre partie quitte le réacteur via une dérivation de gaz brut (22), et
- une conduite d'amenée d'air (4a) se trouve dans le rétrécissement conique de la partie médiane du réacteur, et le cas échéant une conduite d'amenée d'air additionnelle (7a) se trouve dans l'élargissement conique inférieur sous la partie inférieure du réacteur, et l'air parvient dans la partie de réacteur située au-dessus via la bague de buses (5a).
